# EUROPÄISCHE PATENTSCHRIFT

(11) **EP 2 782 662 B1**
(45) Veröffentlichungstag und Bekanntmachung des Hinweises auf die Patenterteilung: **07.02.2018**
(21) Anmeldenummer: 12781361.6
(22) Anmeldetag: 09.11.2012
(51) Int. Cl.: B01D 53/86, B01J 21/18, B01J 37/10, B01J 38/64, B01J 38/48, B01J 35/00, B01J 35/10, B01J 35/02, B01J 37/00

(54) **VERFAHREN ZUR KATALYTISCHEN ENTFERNUNG VON KOHLENDIOXYD UND NOx AUS ABGASEN**
PROCESS FOR THE CATALYTIC REMOVAL OF CARBON DIOXIDE AND NOX FROM EXHAUST GASES
PROCÉDÉ POUR L'ÉLIMINATION CATALYTIQUE DE DIOXYDE DE CARBONE ET DE NOX D'EFFLUENTS GAZEUX

(30) Priorität: 14.11.2011 LU 91900
(43) Veröffentlichungstag der Anmeldung: 01.10.2014
(73) Patentinhaber: CPPE Carbon Process&Plant Engineering S.A., 1337 Luxembourg-Dommeldange (LU)
(72) Erfinder: STRICKROTH, Alain, 4251 Esch/Alzette (LU)
(74) Vertreter: Office Freylinger
(86) Internationale Anmeldenummer: PCT/EP2012/072286
(87) Internationale Veröffentlichungsnummer: WO 2013/072257

(56) Entgegenhaltungen:
- WO-A1-2010/036668
- WO-A1-2011/138425
- CN-A- 101 564 640
- JP-A- 11 347 354
- US-B1- 6 814 948

## Beschreibung

### Technisches Gebiet

Die vorliegende Erfindung betrifft allgemein ein Verfahren zur katalytischen Entfernung von Kohlendioxyd und NOₓ aus Abgasen.

### Stand der Technik

Die Diskussionen über den Klimawandel haben der Menschheit deutlich vor Augen geführt, dass die Ressourcen, die ihr zu Verfügung stehen, begrenzt sind und dass die durch menschliche Tätigkeiten entstandenen Schadstoffe einen großen Impakt auf die Umwelt haben und das Klima nachhaltig verändern. Nachdem in den siebziger Jahren des zwanzigsten Jahrhunderts die Schwefelemissionen im Mittelpunkt standen, sind jetzt die Kohlendioxydemissionen zum zentralen Thema geworden. Seit einigen Jahren wird intensiv nach Möglichkeiten gesucht, die Entstehung dieses Gases möglichst zu vermeiden oder aber aus der Atmosphäre zu entfernen. Zu dieser letzten Möglichkeit wurden verschiedene Verfahren vorgeschlagen, um das Kohlendioxyd aus der Atmosphäre an Feststoffe oder Flüssigkeiten zu binden und dann zu lagern. Solche Verfahren sind zum Beispiel aus der WO2005108297A, KR 2005028624 A, WO2004098740 A bekannt. Es wurde auch versucht, das Kohlendioxyd elektrochemisch zu reduzieren, wobei die elektrische Energie wie in der JP4063115 A beschrieben umweltfreundlich aus Sonnenenergie gewonnen werden kann.

Diese Verfahren haben jedoch den Nachteil, dass sie entweder das Problem nur verlagern oder aber sehr energieintensiv sind.

### Aufgabe der Erfindung

Eine Aufgabe der vorliegenden Erfindung ist es, ein Verfahren bereit zu stellen, das vor allem NOx und Kohlendioxyd aus Abgasen entfernt.

### Allgemeine Beschreibung der Erfindung

Diese Aufgabe wird erfindungsgemäß durch ein Verfahren zur katalytischen Entfernung von Kohlendioxyd und NOₓ aus Abgasen in einem mit Aktivkohlekatalysator gefüllten Reaktor gelöst. Dieses Verfahren ist durch die folgenden Schritte gekennzeichnet:
a) Sättigung des Katalysators mit Wasser,
b) Sättigung oder Teilsättigung der Abgase mit Wasser,
c) Einführung der Abgase in den Reaktor,
d) katalytische Umwandlung von NOx zu NO₂⁻ / NO₃⁻ und parallel dazu die katalytische Umwandlung am selben Katalysator von CO₂ in Kohlenstoff und O₂,
e) Kontinuierliches Auswaschen des Aktivkohlekatalysators mit Wasser und Austragen des Kohlenstoffs als Feststoff sowie NO₂⁻ / NO₃⁻ gelöst im Wasser.

Ein Vorteil des Verfahrens besteht darin, dass NOx und CO₂ unter der Form NO₃⁻ und C aus der Gasphase entzogen werden und nach dem Verfahren als Flüssigkeit (in Wasser gelöstes NO₃⁻) oder Feststoff vorliegen und weiter verwendet werden können.

Das Verfahren erlaubt es, Abgase aus industriellen Anlagen insbesondere aus Verbrennungsabgasen zu behandeln, die Kohlendioxyd und NOₓ enthalten (z.B. aus Erdgasverfeuerung) und diese beiden Schadstoffe gleichzeitig und parallel, also in einem Verfahren ganz bzw. zu einem Teil aus den Abgasen zu entfernen.

Der Katalysator sollte vorteilhafterweise vor der ersten Benutzung mit NOx gesättigt oder teilgesättigt werden.

Unter dem Begriff "Sättigung oder Teilsättigung des Katalysators mit NOₓ" versteht man im Zusammenhang mit der vorliegenden Erfindung, dass die Abgase die anschliessend auf den Aktivkohlekatalysator gelangen, über genügend exotherme Umwandlungsenergie verfügen, welche durch die NOₓ Umwandlungen in NO₃⁻ erfolgt um anschliessend mit der CO₂ Umwandlung zu beginnen. Dieses entspricht, wie aus Versuchen hervorging, einer Grössenordnung von 0.1 - 0.3 kg NOₓ/m³ Aktivkohlekatalysator.

Unter dem Begriff "Sättigung des Katalysators mit Wasser" versteht man im Zusammenhang mit der vorliegenden Erfindung, dass der Katalysator so lange mit Wasser oder Wasserdampf beaufschlagt wird, bis Wasser aus dem Reaktor läuft. Dieses entspricht, wie aus weiter unter beschriebenen Versuchen hervorging, einer Größenordnung von 250 bis 550 kg Wasser/m³ Aktivkohlekatalysator.

Im Gegensatz zu dem Verfahren CN 101 564 640, wird hier das Verfahren mit einem "nassen" Katalysator durchgeführt. Der Katalysator ist vor dem Beginn der Reaktion nass und wird vor und während des Verfahrens mit Wasser besprüht und die entstandenen Feststoffe werden, während des Verfahrens, also ohne dass das Verfahren abgebrochen werden muss, abgewaschen. In CN 101 564 640 dagegen wird der Katalysator "trocken" gefahren und erst nachdem die Abreinigung nicht mehr effektiv funktioniert (Schritt 5 des Verfahrens), wird das Verfahren unterbrochen und der Katalysator wird mit Wasser besprüht um die daran haftenden Produkte abzuwaschen wodurch eine verdünnte, flüssige Säure mit Rückständen erhalten wird (Schritt 6 des Verfahrens). Dem Reaktor im Verfahren CN 101 564 640 wird in Schritt 7 100°C bis 120°C warme Luft zugegeben um den Katalysator zu trocknen bevor der Reaktor wieder in Betrieb genommen wird. Die zu behandelnden Gase im Verfahren aus CN 101 564 640 enthalten zwar auch Wasserdampf jedoch nur in einer sehr geringen Konzentration (2-12 Vol.%).

Ein wesentlicher Unterschied zwischen den Verfahren besteht demnach darin, dass das Verfahren in CN 101 564 640 regelmäßig unterbrochen werden muss um den Katalysator zu recyceln und der Katalysator nach dem Recyceln durch Besprühen mit Wasser, getrocknet werden muss. Diese Verfahrensbedingungen erlauben es offensichtlich nicht CO₂ in Kohlenstoff als Feststoff umzuwandeln, denn nach dem Abwaschen des Katalysators wird eine verdünnte, flüssige Säurelösung erhalten, die auf einem Membranfilter gereinigt wird. Wäre in dieser Lösung Kohlenstoff als Feststoff vorhanden, hätte dies auffallen müssen, denn die Lösung wäre schwarz gewesen und der Feststoff wäre auf dem Membranfilter-unübersehbar-zurückgehalten worden.

Bei dem Verfahren wird mindestens 30 Vol.% des in den Abgasen enthaltenen CO₂ umgewandelt, bevorzugt mindestens 50 Vol.%, besonders bevorzugt mindestens 70 Vol.% und insbesondere mindestens 90 Vol.%. Des weiteren können mindestens 20 Vol.% der enthaltenen NOx umgewandelt werden, bevorzugt mindestens 50 Vol.%, besonders bevorzugt mindestens 70 Vol.% und insbesondere mindestens 90 Vol.% abgebaut werden

Unter dem Begriff "NOₓ" versteht man im Zusammenhang mit der vorliegenden Erfindung Stickoxide, Nitrose Gase oder Stickstoffoxide als Sammelbezeichnungen für die gasförmigen Oxide des Stickstoffs. Sie werden üblicherweise mit NOₓ abgekürzt, da es auf Grund der vielen Oxidationsstufen des Stickstoffs mehrere Stickstoff-Sauerstoff-Verbindungen gibt.

Unter dem Begriff "Sättigung/Teilsättigung der Abgase mit Wasser" versteht man im Zusammenhang mit der vorliegenden Erfindung, dass Abgase mittels z.B. einer Quenche/Wäschers mit Wasser gesättigt/teilgesättigt werden. Die Abgase werden demnach bevorzugt bis zu ihrem Taupunkt mit Wasserdampf gesättigt. Die Abgase sollten aber mindestens eine relative Feuchtigkeit von 50%, bevorzugt 60%, besonders bevorzugt 80% aufweisen.

Gemäss einer bevorzugten Ausgestaltung der Erfindung werden die Abgase vor Schritt b) in einen Vorreaktor geführt, welcher einen zweiten Katalysator enthält und anschliessend im Schritt b) mit Wasser gesättigt oder teilgesättigt.

Gemäss einer weiteren bevorzugten Ausgestaltung der Erfindung werden die Abgase nach Schritt b) in einen Vorreaktor geführt werden, welcher einen zweiten Katalysator enthält und anschliessend in den Reaktor in Schritt c) eingeführt.

Der zweite Katalysator im Vorreaktor wird bevorzugt in trockenem Zustand benutzt wird, d.h. es wird kein Wasser aufgegeben und es wird darauf geachtet, dass sich während der Reaktion kein Kondenswasser bildet. Im Fall wo die Abgase erst nach der Quenche in den Vorreaktor eingeleitet werden, muss darauf geachtet werden, dass der Taupunkt der Gase während ihrer Verweildauer im Vorreaktor nicht unterschritten wird.

Unter dem Begriff "Auswaschen des Katalysators mit Wasser" versteht man im Zusammenhang mit der vorliegenden Erfindung das Aufgeben von Wasser in den oberen Teil des Reaktors, wobei das Wasser dann im Gegenstrom zu den Gasen den Reaktor durchfliesst. Alternativ kann das Waser auch im Gleichstrom zu den Gasen aufgegeben werden.

Der Kohlenstoff nach der Reaktion wird als Feststoff durch Auswaschen des Katalysators aus dem Reaktor ausgetragen. Er kann sowohl als C als auch als C-Verbindungen vorliegen. Unter dem Begriff C-Verbindungen versteht man im Zusammenhang mit der vorliegenden Erfindung C(NO)-Komplexe, und andere Verbindungen zwischen C, N und O. Unter dem Begriff "Kohlenstoff" versteht man demnach im Zusammenhang mit der vorliegenden Erfindung sowohl Kohlenstoff (C) als auch als C-Verbindungen wie C(NO)-Komplexe und andere Verbindungen zwischen C, N und O.

Vorzugsweise werden Abgase behandelt die zwischen 100 und 1500 ppm NOₓ und zwischen 0.3 und 15 Vol.% CO₂ enthalten. Selbstverständlich ist es auch möglich Abgase zu behandeln, in denen das Verhältnis der beiden Schadstoffe außerhalb dieser Spanne liegt. In einem solchen Fall kann es sein, dass der Schadstoff, der über der oben angegebenen Grenze liegt, nicht vollständig, sondern nur teilweise aus den Abgasen entfernt wird.

Gemäss einer bevorzugten Ausführung der Erfindung kann aber auch CₓH_{y} - als zusätzliche Schadstoffe - gleichzeitig zu dem CO₂ und NOₓ aus den Abgasen entfernt werden, insofern CₓH_{y} in den Abgasen enthalten ist.

Unter dem Begriff "CₓH_{y}" versteht man im Zusammenhang mit der vorliegenden Erfindung Verbindungen, die nur aus Kohlenstoff und Wasserstoff bestehen, wie z.B. geradkettig oder verzweigte Alkane, Cycloalkane, geradkettig oder verzweigte Alkene, geradkettig oder verzweigte Alkine und Aromaten.

Das Gehalt an CₓH_{y} der zu behandelden Gase liegt vorzugsweise zwischen 0 und 700 ppm CₓH_{y}.

Unterhalb der oben angegebenen Grenzen erfolgt eine marginale oder keine Beeinflussung der NOₓ - CO₂ Reaktion. Im Fall wo die zusätzlichen Schadstoffe über der oben angegebenen Grenze liegt, werden diese nicht vollständig, sondern nur teilweise aus den Abgasen entfernt.

Die Eingangstemperaturen der Abgase in dem Reaktor liegen vorzugsweise zwischen der Umgebungstemperatur und 150 °C. Höhere Temperaturen könnten den Katalysator auf Dauer schädigen.

Der Sauerstoffgehalt der Abgase ist eigentlich nicht kritisch, er sollte jedoch idealerweise mindestens 5 Vol.%, bevorzugt mindestens 8 Vol.%, besonders bevorzugt mindestens 10 Vol.%, und insbesondere mindestens 12 Vol.% betragen.

Die Sättigung der Abgase mit Wasser kann ganz einfach durch Quenchen oder mit einem Wäscher oder ein ähnliches Verfahren durchgeführt werden.

Die Abgase sollten natürlich so wenig wie möglich Feststoffe, Staub und ähnliches enthalten um eine Vergiftung und/oder Zusetzung des Katalysators zu verhindern. Dieses Entstauben der Abgase wird durch konventionelle Filteranlagen erreicht, bevor die Abgase dann in die Quenche oder den Wäscher geleitet werden.

Der Abreinigungsfaktor von CO₂ wird durch das Auswaschen des Aktivkohlebettes beeinflusst. So stellt sich z.B. in den durchgeführten Versuchen bei gleichen Abgaseingangsparametern bei einem Auswaschen des Katalysators mit Wasser eine CO₂ Abscheidung von ungefähr 50% ein. Im Gegensatz zum Auswaschen des Katalysators mit einer Base z.B. 5-30% NaOH Lösung kann eine CO₂Abscheidung von über 90% erreicht werden.

Unter dem Begriff "Base" versteht man im Zusammenhang mit der vorliegenden Erfindung eine wässrige Lösung von Mⁿ⁺(OH⁻)ₙ wobei M ausgewählt ist aus den Gruppen bestehend aus Alkalimetallen und Erdalkalimetallen und wobei n 1, 2 oder 3 ist. Bevorzugt wird eine wässrige NaOH Lösung benutzt.

Die Konzentration der Base liegt idealerweise in einer Grössenordnung von 5 - 30 Gewichts% in Wasser. Das Einbringen von feinsten Wassertröpfchen mit oder ohne Mⁿ⁺(OH⁻)ₙ ins Rauchgas ergeben eine Erniedrigung der Temperatur und u.a. eine Zunahme vom Wassergehalt mit gegebenenfalls einem entsprechenden Mⁿ⁺(OH⁻)ₙ -Anteil bis zu einer relativen Luftfeuchtigkeit von max. 100% im Rauchgas.

Das Auswaschen des Aktivkohlebetts kann auch positiv beeinflusst werden in dem man kationische, anionische, nicht ionische oder amphotere Tenside in das Wasser oder die Base mischt, die zum Abwaschen des Katalysators benutzt wird.

Unter dem Begriff "Tenside" versteht man im Zusammenhang mit der vorliegenden Erfindung Substanzen, welche die Oberflächenspannung einer Flüssigkeit oder die Grenzflächenspannung zwischen zwei Phasen herabsetzen und die Bildung von Dispersionen ermöglichen oder unterstützen bzw. als Lösungsvermittler wirken.

### Kurze Beschreibung der Figuren

Weitere Einzelheiten und Vorteile der Erfindung können der nachfolgenden ausführlichen Beschreibung einer möglichen Ausführungsform der Erfindung anhand der beiliegenden Figuren 1 - 11 entnommen werden. Diese zeigen:
Fig. 1 eine schematische Darstellung der ersten Versuchsanordnung,
Fig. 2 eine graphische Darstellung der in der ersten Versuchsordnung gemessenen Werte vom CO₂, NOₓ und O₂-Gehalt der Abgase am Eintritt bzw. Austritt des Reaktors, wobei der Katalysator mit NaOH ausgewaschen wurde,
Fig. 3 eine graphische Darstellung der in der ersten Versuchsordnung gemessenen Werte vom CO₂, NOₓ, CₓH_{y} und O₂ -Gehalt der Abgase am Eintritt bzw. Austritt des Reaktors, wobei der Katalysator mit NaOH ausgewaschen wurde,
Fig. 4 eine graphische Darstellung der in der ersten Versuchsordnung gemessenen Werte vom CO₂, NOₓ und O₂-Gehalt der Abgase am Eintritt bzw. Austritt des Reaktors, wobei der Katalysator mit Wasser ausgewaschen wurde,
Fig. 5 eine graphische Darstellung der in der ersten Versuchsordnung gemessenen Werte vom CO₂, NOₓ, CₓH_{y} und O₂ -Gehalt der Abgase am Eintritt bzw. Austritt des Reaktors,, wobei der Katalysator mit Wasser ausgewaschen wurde,
Fig. 5a eine graphische Darstellung der in der ersten Versuchsordnung gemessenen Mittwerte mehrere Experimente vom CO₂ und NOₓ -Abau der Abgase am Eintritt bzw. Austritt des Reaktors, wobei der Katalysator mit NaOH ausgewaschen wurde.
Fig. 6 eine schematische Darstellung der zweiten Versuchsanordnung,
Fig. 7 eine graphische Darstellung der in der zweiten Versuchsordnung gemessenen Werte vom CO₂, NOₓ und O₂-Gehalt der Abgase am Eintritt des Vorreaktors bzw. Austritt des Reaktors, wobei der Katalysator im zweiten Reaktor mit NaOH ausgewaschen wurde,
Fig. 8 eine graphische Darstellung der in der zweiten Versuchsordnung gemessenen Werte vom CO₂, NOₓ, CₓH_{y} und O₂-Gehalt der Abgase am Eintritt des Vorreaktors bzw. Austritt des Reaktors wobei der Katalysator im zweiten Reaktor mit NaOH ausgewaschen wurde,
Fig. 9 eine graphische Darstellung der in der zweiten Versuchsordnung gemessenen Werte vom CO₂, NOₓ und O₂ sowie CₓH_{y}-Gehalt der Abgase am Eintritt des Vorreaktors bzw. Austritt des Reaktors wobei der Katalysator im zweiten Reaktor Wasser ausgewaschen wurde,
Fig. 10 eine graphische Darstellung der in der zweiten Versuchsordnung gemessenen Werte vom CO₂, NOₓ, CₓH_{y} und O₂-Gehalt der Abgase am Eintritt des Vorreaktors bzw. Austritt des Reaktors wobei der Katalysator im zweiten Reaktor mit Wasser ausgewaschen wurde.
Fig. 11 eine graphische Darstellung der in der zweiten Versuchsordnung gemessenen Werte vom CO₂ und NOₓ-Gehalt der Abgase am Eintritt bzw. Austritt des Vorreaktors.

### Beschreibung einer Ausgestaltung der Erfindung

### Versuchsanordnung 1

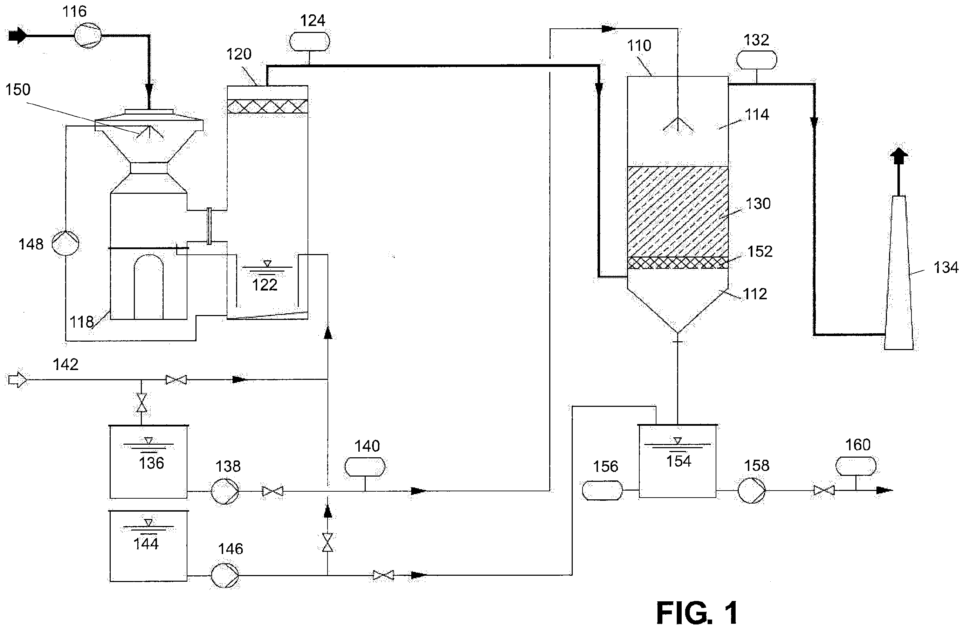

Die in der Figur 1, zur Illustration der Erfindung, gezeigte Versuchsanordnung 1 umfasst einen Versuchsreaktor 110, in dessen unteren Teil 112, ein Versuchsgas zugeführt wird und in dessen oberen Teil 114 Wasser oder eine Base aufgesprüht wird.

Das Versuchsabgas stammt aus einer Verbrennung von Naturgas (Erdgas). Das Abgas wird mit Hilfe eines Elektrofilters (nicht dargestellt) entstaubt und gelangt über ein Gebläse 116 mit ca. 300°C in eine Venturi Quenche 118. Der in dem Tropfenabscheider 120 integrierte Vorlagebehälter 122 der Venturi Quenche 118 wurde mit Wasser oder einer 15%-igen NaOH Lösung befüllt. Die Abgase werden in der Venturi Quenche 118 bis auf Sättigungstemperatur abgekühlt und gesättigt.

Ein erstes Messgerät 124 analysiert die Zusammensetzung (NOx-Gehalt, CO₂-Gehalt, sowie O₂-Gehalt und in einigen Versuchen CxHy-Gehalt), die Temperatur, die Durchflussmenge und die Durchflussgeschwindigkeit des Versuchsabgases.

Das Versuchsgas gelangt dann in den Reaktor 110.

Der Reaktor 110 wurde mit einem Aktivkohlekatalysator 130 befüllt.

Das Versuchsgas durchströmt den Reaktor 110 und den sich darin befindenden Katalysator 130 von unten nach oben und wird nach Austritt aus dem Reaktor 110 in einem zweiten Messgerät 132 auf die gleichen Parameter wie bei dem ersten Messgerät 124 d.h. Zusammensetzung (NOₓ-Gehalt, CO₂-Gehalt, sowie O₂-Gehalt und in einigen Versuchen CₓH_{y}-Gehalt), die Temperatur, die Durchflussmenge und die Durchflussgeschwindigkeit, geprüft und anschließend in die Atmosphäre durch einen Schornstein 134 abgegeben.

Am Aktivkohlekatalysator 130, welcher nicht zusätzlich mit Metallen imprägniert ist, wird das NOₓ, CO₂ sowie gegebenenfalls CₓH_{y} katalytisch unter dauernder Zugabe von einer Base oder Wasser (Abwaschen des Aktivkohlebettes) umgewandelt.

Das in dem Reaktor 110 benötigte Wasser oder Base wird aus einem Vorratsbehälter 136 mittels einer Pumpe 138 über ein Messgerät 140, wo der Durchfluss gemessen wird, in den oberen Teil 114 des Reaktors 110 geleitet, wo das Wasser / Base den Aktivkohlekatalysator 130 im Gegenstrom zu dem Versuchsgas durchfließt.

Das für die Quenche 118 benötigte Wasser kommt direkt aus der Wasserversorgung 142 und wird im Kreislauf gefahren. Im Fall wo die Quenche 118 mit einer Base betrieben wird, wird die Base aus dem Vorratsbehälter 144 mittels einer Pumpe 146 in den Vorlagebehälter 122 des Tropfenabscheiders 120 der Quenche 118 befördert. Das in dem Vorlagebehälter 122 des Tropfenabscheiders 120 befindliche Wasser oder die Base wird mittels einer Pumpe 148 zum Sprühkopf 150 der Quenche 118 befördert.

Der Reaktor 110 weist einen Füllkörper 152 auf, der sich unterhalb des Aktivkohlekatalysators 130 befindet. Dieser Füllkörper 152 dient zum Verteilen des Gases und sollte aus einem inerten Material wie z.B. Al₂O₃ bestehen. Dieser Füllkörper sorgt dafür, dass die Gase sich über den gesamten Katalysator verteilten

Das durch die Reaktionen am Katalysator 130 gebildete NO₃⁻ sowie Kohlenstoff resp. Kohlenstoffverbindungen werden von dem Katalysator 130 durch Besprühen mit Wasser oder einer Base, in Abhängigkeit von Volumen des Aktivkohlekatalysators 130 und der NOₓ und CO₂ Konzentrationen sowie zusätzlich, falls vorhanden, CₓH_{y} Konzentrationen, im Gegenstrom zum Gas abgespült.

Im Falle der Pilotanlage wurde der Aktivkohlekatalysator 130 dauernd mit einer Wasser-/ Basenmenge von 5-20 I / Min gespült. Die Menge an Wasser / Base, die gebraucht wird, richtet sich nach den Schadstoffkonzentrationen. Falls nicht genügend, entsprechend den auftretenden Schadstoffkonzentrationen, abgewaschen wird, können sich die Poren des Aktivkohlekatalysators 130 zusetzen und die gesamten Reaktionen kommen zum Erliegen.

Im unteren Teil 112 des Reaktors 110 wird das Prozesswasser gegebenenfalls zusammen mit der Base und der im Prozess entstandene und darin suspendierte Kohlenstoff resp. Kohlenstoff-Verbindungen in einem Behälter 154 aufgefangen und der pH wird mittels eines Messgeräts 156 bestimmt. Anschließend wird die Flüssigkeit durch eine Pumpe 158 abgepumpt und die Durchflussmenge wird mit einem weiteren Messgerät 160 festgestellt.

In der beschriebenen Anlage wird das NOx der Abgase katalytisch an feuchten Aktivkohlekatalysatorenkörnern zu NO₃⁻ umgewandelt, und gleichzeitig bzw. parallel wird Kohlendioxid zu Kohlenstoff und Sauerstoff aufgespalten resp. falls vorhanden CxHy zu Kohlenstoff und H₂ umgewandelt. Ein Teil des Kohlenstoffs kann jedoch auch als Kohlestoff-Verbindungen vorliegen.

Die Versuche wurden unter folgenden Bedingungen durchgeführt: Rohgasvolumenstrom: 150 m³/h min. bis max. 250 m³/h,
- NOₓ Gehalt der Rauchgase zwischen 100 ppm und 1000 ppm.
- CO₂ Gehalt der Rauchgase zwischen 0 Vol.% und 6Vol.%
- Gastemperatur Reaktoreintritt zwischen 15 und 80°C.
- O₂-Gehalt der Rauchgase zwischen 10-18 Vol%
- Wassersättigung und Kühlung der Abgase im Reaktor durch Quenchen mit Wasser oder 5-30% NaOH Lösung
- Temperatur Abgas (Austritt): min. 30°C bis max. 45 °C
- Taupunkttemperatur Gesättigt.
- Getestete Aktivkohlekatalysatoren wurden von der Firma NORIT Nederland B.V. aus Postbus 105 NL-3800 AC Amersfoort unter den Bezeichnungen Norit_PK1- 3, Norit_PK_2-4 und Norit_PK_3-5 zur Verfügung gestellt.

Bei diesen Aktivkohlekatalysatoren handelt es sich um ein Aktivkohlegranulat, mit einer Körnung zwischen 1-3 mm; 2-4 mm bzw. 3-5 mm die durch Dampfaktivierung hergestellt wurden. Folgende allgemeine Eigenschaften werden vom Hersteller zugesichert: Jodzahl 800; Methylenblauadsorption 11 g/100 g; Innere Oberfläche (B.E.T) 875 m²/g; Schüttdichte 260 kg/m³; Dichte nach Rückspülen 230 kg/m³; Gleichförmigkeitsgrad 1,3 - Aschegehalt 7 Gew.-%; pH alkaline; Feuchte (verpackt) 2 Gew.-%.

Bei den Versuchen wurden Rauchgasanalysegeräte der Marke Testo verwendet. Die Geräte sind neuerer Generation (Baujahr 2009) und wurden vom Hersteller vor Versuchsdurchführung überprüft und kalibriert.

Der Ablauf der NOₓ-Umsetzung auf der Katalysatoroberfläche verläuft - entsprechend dem aktuellen Stand der Kenntnisse - formal nach folgenden Summenformeln der exothermen, respektiv endothermen Reaktionen:
Oxidation

   2 NO + O₂ → 2 NO₂

   2 NO₂ → N₂O₄

   NO + NO₂ → N₂O₃
Salpetersäureerzeugung durch Zugabe von Wasser

   3 NO₂ + H₂O → 2 HNO₃ + NO

   N₂O₄ + H₂O → HNO₃ +HNO₂

   3 N₂O₄ + 2H₂O → 4 HNO₃ + 2 NO

   N₂O₃ + H₂O → 2 HNO₂

   3 HNO₂ → HNO₃ + 2 NO + H₂O

   Neutralisierung durch eine Base

   N₂O₄ + 2 NaOH → NaNO₃ + NaNO₂ + H₂O

   NO + NO₂ + 2 NaOH → 2 NaNO₂ + H₂O

   N₂O₃ + 2 NaOH → 2NaNO₂ + H₂O

Falls vorhanden: Der Ablauf der CₓH_{y}-Umsetzung nach C und H₂ auf der Katalysatoroberfläche. Das C kann auch hier temporär an die Aktivkohle und/oder C-Verbindungen und/oder andere Verbindungen angelagert werden.

Ohne sich auf eine Theorie festlegen zu wollen, wird angenommen, dass:
- NOx und O₂ zu den aktiven Zentren des Katalysators wandert. NOx wird hier zum Teil zu NO₂ sowie N₂O₃ und N₂O₄ oxidiert.
- NO₂ wandert dann aus den aktiven Zentren des Katalysators heraus und reagiert mit NaOH falls vorhanden auf der wässerigen Umhüllung um das Katalysatorkorn zu NO₂⁻, NO₃⁻ und H₂O.
- das CO₂ Molekül, ebenfalls in die Poren des Katalysatorkorns transportiert wird und dort durch Zuführen der Bildungsenergien getrennt resp. an C-Verbindungen adsorbiert wird. Die NaOH-Lösung, falls vorhanden, welche sich in der wässrigen Hülle um das Korn befindet, adsorbiert durch hohe Oberflächenspannungen (spezifische Oberfläche) den C-Anteil von CO₂ und 02. Es entstehen ebenfalls sogenannte Kohlenstoffverbindungen.
- der an einer Kohlenstoffverbindung befindliche C-Teil innerhalb des Wassers oder mit der Base als Suspension vorhanden ist.
- Der Austrag des gebildeten C und/oder der gebildeten Kohlenstoffverbindungen in einer Suspension mit Wasser oder der Base aus dem Katalysator durch Waschen mit Wasser oder Base erfolgt. Der gebildete C und/oder die gebildeten Kohlenstoffverbindungen fallen nach kurzer Zeit aus.

Zum Waschen des Katalysators wurde enthärtetes bzw. entsalztes Wasser verwendet mit oder ohne Zugabe von Base (z.B. NaOH).

Es wird angenommen, ohne sich jedoch auf eine Theorie festlegen zu wollen, dass die Adsorption von CO₂ durch die Ausnutzung der exothermen Energie, die durch die Oxidation/Neutralisierung von NOx zu NO₃⁻ bzw. zu NO₂⁻erzeugt wird, erfolgt.

Der Reaktor, in den durchgeführten Versuchen ist aus glasfaserverstärktem Kunststoff, hat ein Volumen von ca. 2 m³ und ist mit 2 m³ eines Aktivkohlekatalysators vom Typ Norit_PK_2-4 befüllt.

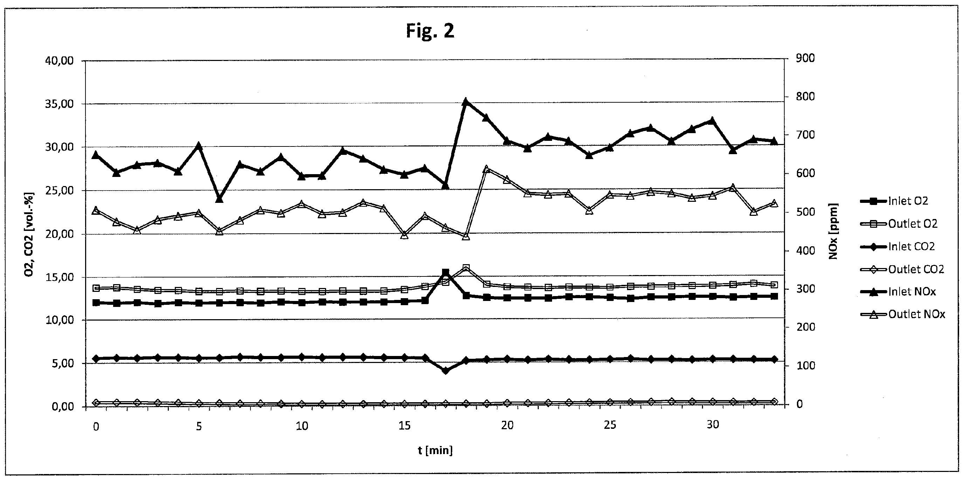

In einer ersten Phase wurde die Versuchsanlage mit einem Durchsatz von ca. 220 m³ /h unter Zugabe von NOₓ zwischen 500 und 800 ppm gefahren. Insgesamt wurde der Reaktor mit ca. 8 kg NOₓ (ca. 4 kg NOₓ/m³ Aktivkohlekatalysator) beladen (Fig. 2).

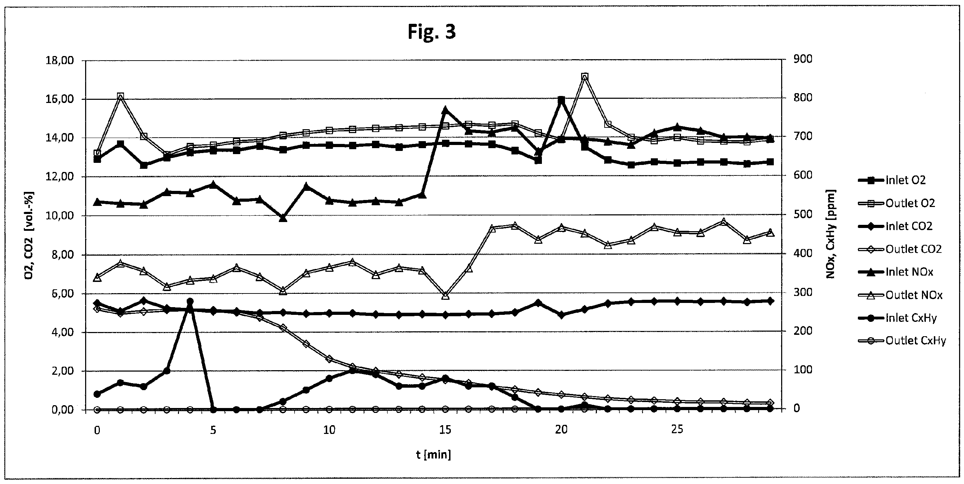

Die Abgase wurden gemäß diesem Test in einer Quenche, die mit einer 15% NaOH Basenlösung gefüllt war, von ca. 300°C auf ca. 60°C herunter gekühlt. Hierbei wurde das Abgas gesättigt, d.h. das Abgas hatte eine relative Luftfeuchtigkeit von ungefähr 100%. Gemäß der Versuche (siehe Fig. 2 und 3) erfolgte die dauernde Waschwasseraufgabe, die aus einer 5-30% NaOH-Lösung bestand, auf den Aktivkohlekatalysator mit bis zu 10 l / Min. Der NOₓ und der CO₂ Gehalt der Abgase wurde wie in der Fig. 1 dargestellt jeweils am Eintritt und am Austritt des Reaktors gemessen. Die Messungen erfolgten alle 60 Sekunden und wurden auf den Figuren 2 und 3 graphisch dargestellt. Die in der Figur 2 dargestellten Messungen erfolgten nach Sättigung des Katalysators mit NOx. Die CO₂ Konzentration betrug zwischen 4,8 Vol% und 5,6 Vol%. In den Versuchen (siehe Fig. 3) wurde festgestellt, dass nach ca. 5 Minuten die Abreinigung von CO₂ gelang wobei die Abreinigungswerte von CO₂ dann kontinuierlich bis auf 99,5% stiegen, unberührt von der Zunahme oder Abnahme der CO₂ Werte im Abgas. Der Testversuch verlief kontinuierlich über ca. 60 Minuten. Über diesen gesamten Zeitraum zeigten die behandelten Abgase eine Minderung von NOₓ um ca. 30-40%, wie aus der Fig. 2 ersichtlich ist. Bei den Versuchen wie in Fig. 3 dargestellt war ebenfalls CₓH_{y} im Abgas enthalten und wurde zu 100% abgeschieden.

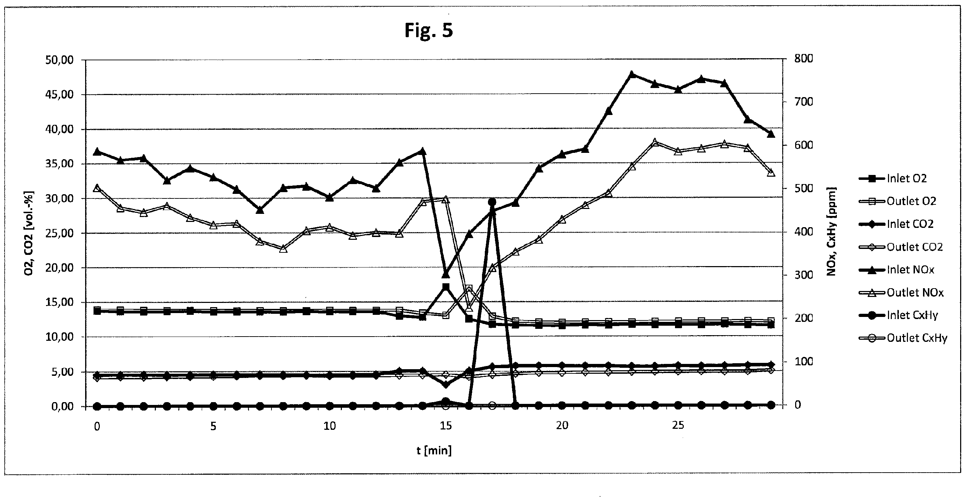

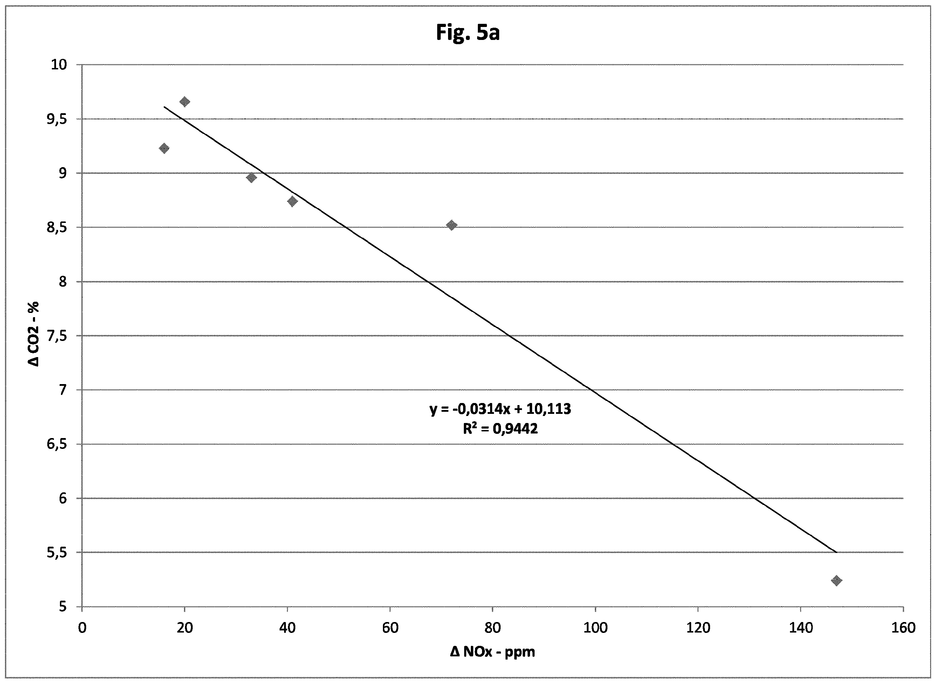

Bei den Versuchen (siehe Fig. 5a) wurde auch festgestellt, dass die Verringerung der CO₂ Konzentration d.h der Abbau von CO₂ im Reaktor, im Verhältnis zur Verringerung der NOₓ-Konzentration d.h der Abbau von NOₓ im Reaktor, wobei beide Werte als Volumen-% ausgedrückt sind ein lineares Verhältnis darstellt das der Gleichung y= -0.0314x+10.113 entspricht, wobei das Bestimmtheitsmaß (R²) gleich 0.9442 ist.

In diesen Versuchen ist ein Anstieg des O₂-Gehalt zwischen Eingangsmessungen und Ausgangsmessungen festgestellt worden. Der Anstieg vom O₂-Gehalt ist weitgehend parallel zu der Verringerung des CO₂ Gehalts.

Das ausgetragene Waschwasser aus dem Reaktor war bei allen Versuchen komplett tiefschwarz verfärbt.

Man konnte im Waschwasser sowohl Neutralisierungssalze wie auch Kohlenstoff/Kohlenstoffverbindungen nachweisen. Untersuchungen eines unabhängigen Labors haben nachgewiesen, dass es sich bei dem Kohlenstoff/Kohlenstoffverbindungen um einen unterschiedlichen Kohlenstoff handelt als in der Aktivkohle. Versuche mit radioaktiv markiertem CO₂ Versuchsgas haben erwiesen, dass der Kohlenstoff im Waschwasser aus dem CO₂ stammt und es sich dabei nicht um Teile des Katalysators handelt.

Die Neutralisierungssalze wie auch der Kohlenstoff/Kohlenstoff-verbindungen sedimentierten nach kurzer Zeit.

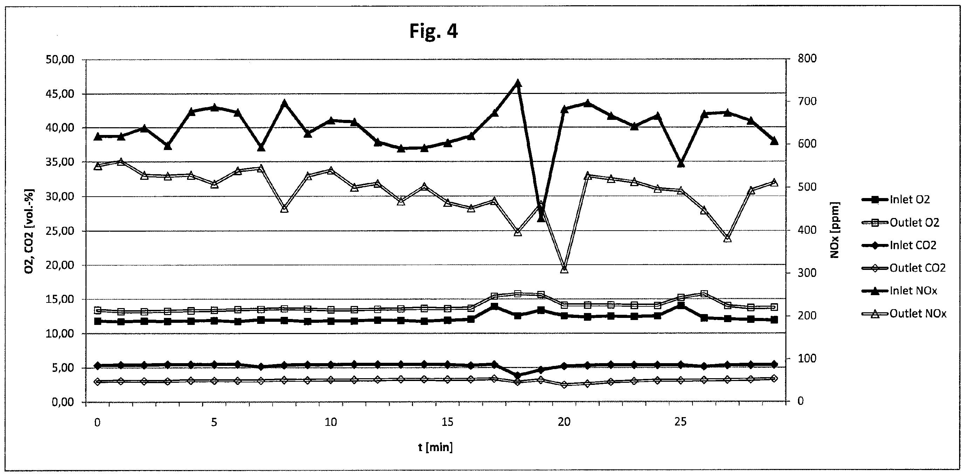

Für die auf den Figuren 4 und 5 dargestellten Versuchsreihen wurde, anstatt NaOH, Wasser zur Sättigung der Abgase sowie zum Auswaschen des Katalysators benutzt. Auch hier hat sich gezeigt, dass NOₓ und CO₂ (Fig. 4) bzw. NOₓ, CO₂ und CₓH_{y} (Fig. 5) aus den Abgasen entfernt wurden. Es hat sich auch gezeigt, dass die CO₂ Umwandlung - im Fall, wo Wasser, anstatt von Base benutzt wurde - nicht so effizient war. Auch in diesen Versuchen ist ein Anstieg des O₂ Gehaltes zwischen Eingangsmessungen und Ausgangsmessungen festgestellt worden.

Die vier grafisch dargestellten Versuchsresultate belegen, dass sowohl NOₓ als auch CO₂ bzw. CₓH_{y} abgebaut wurden. Die Versuche haben ebenfalls gezeigt, dass der O₂ Gehalt ansteigt.

Die Versuche (siehe Fig. 3), die im Zusammenhang mit dieser Erfindung durchgeführt wurden, haben ergeben, dass ein gewisser Sättigungsgrad des Aktivkohlekatalysators mit NOₓ vorhanden sein muss, bevor die CO₂ Abscheidung anfängt.

### Versuchsreihe 2

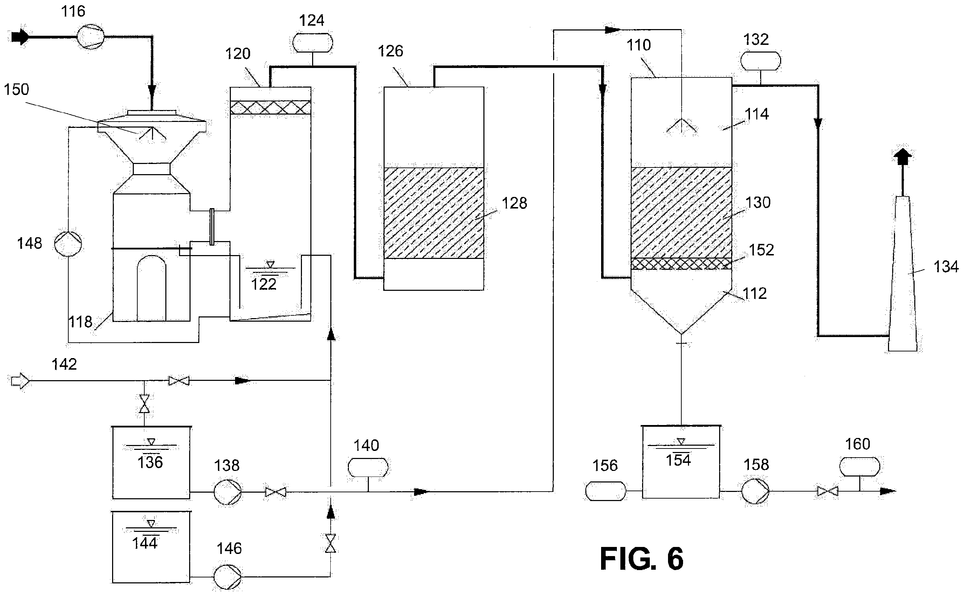

Die in der Figur 6, zur Illustration der Erfindung, gezeigte zweite Versuchsanordnung unterscheidet sich von der ersten Versuchsanordnung dadurch, dass das Versuchsgas von der Quenche 118 zuerst in einen Vorreaktor 126 welcher mit einem Katalysator 128 befüllt ist und anschliessend in den Reaktor 110 geleitet wird.

Bei diesem Katalysator 128 des Vorreaktors 126 handelt es sich um einen Aktivkohlekatalysator der Firma NORIT Nederland B.V. aus Postbus 105 NL-3800 AC Amersfoort der unter den Bezeichnungen Norit_RST-3 zur Verfügung gestellt wird. Es handelt sich hierbei um ein extrudiertes Aktivkohlegranulat, mit einer Körnung von 3 mm. Folgende allgemeine Eigenschaften werden vom Hersteller zugesichert: Butanadsorbtion bei p/p0=0.1: 24 g/100 g, Innere Oberfläche (B.E.T) 1200 m²/g; Schüttdichte 400 kg/m³; Härte (Ball-pan Hardness): 98, Feuchte (verpackt) 5 Gew.-%, Dekompositionszeit Max.: 15 min, Min.: 8 min.

Der Hauptunterschied zwischen den beiden Versuchsanordnungen besteht wie gesagt darin, dass in der zweiten Versuchsanordnung ein Vorreaktor 126 benutzt wird. Dieser Vorreaktor 126 wird ohne Zugabe von Wasser oder Base mit den Abgasen aus der Quenche 118 beaufschlagt. Der Katalysator 128 im Vorreaktor 126 arbeitet demnach im Prinzip "trocken" während der Katalysator im Reaktor 110 "nass" arbeitet: Der Katalysator 128 im Vorreaktor 126 bleibt "trocken"; da sich die Temperatur der Abgase in diesem Vorreaktor nur unwesentlich ändert, erfolgt auch keine oder nur eine unwesentliche Kondensation des in den Abgasen enthalten Wasserdampfs.

Es ist aber auch möglich und vielleicht einfacher, das Versuchsgas herab zu kühlen (mit einem Wärmetauscher z.B.) und dann in den Vorreaktor 126 zu leiten. Anschliessend wird das Gas dann in die Quenche 118 geleitet und von da aus dann in den Reaktor 110.

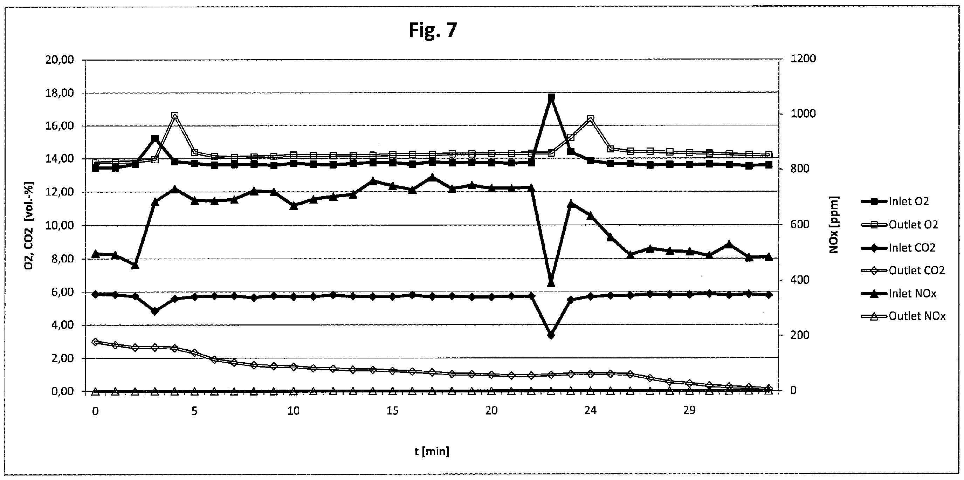

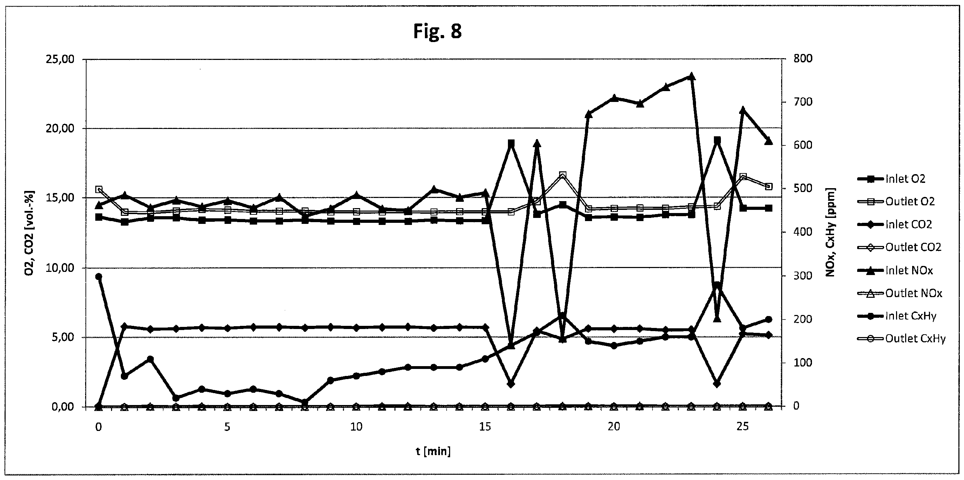

Die auf den Figuren 7 und 8 dargestellten Resultate stammen aus Versuchen bei denen in der Quenche ausschliesslich mit Wasser und in dem Reaktor jeweils eine 5% NaOH Lösung benutzt wurde.

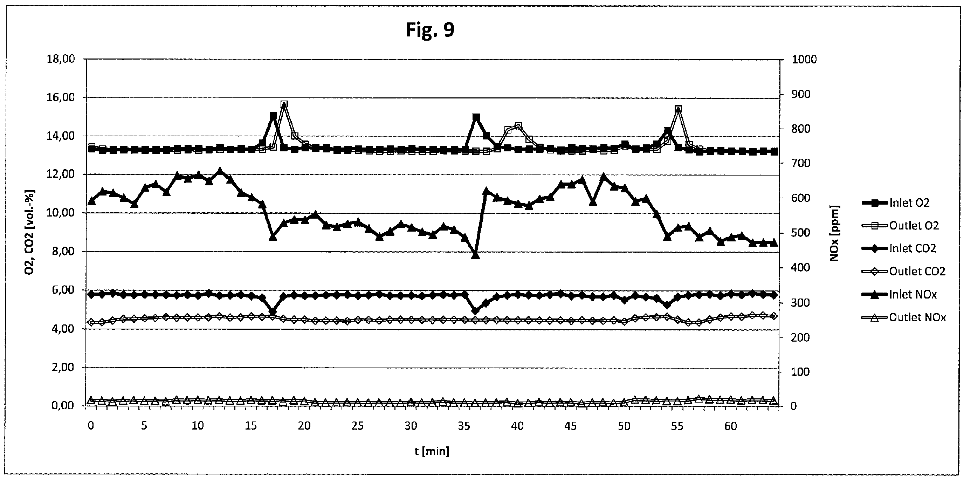

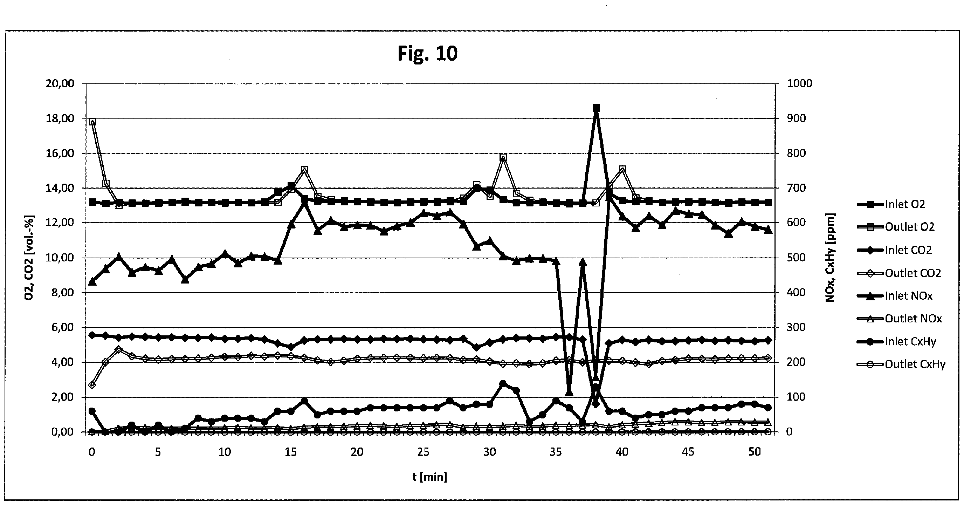

Die auf den Figuren 9 und 10 dargestellten Resultate stammen aus Versuchen bei denen in der Quenche und in dem Reaktor jeweils nur Wasser benutzt wurde.

Bei den Versuchen aus den Figuren 7 und 9 war kein CₓH_{y} in den Abgasen enthalten. In den Figuren 8 und 10 wurde mit Abgasen welche zwischen 10 und 300 ppm CₓH_{y} enthielten, gearbeitet.

Wie aus den Figuren 7-10 ersichtlich ist, wurde NOx bis zu 100% abgebaut. Nur in den auf Figur 10 dargestellten Versuchen verbleiben wenige ppm NOₓ in den Abgasen. In allen anderen Testen ist NOₓ in den behandelten Abgasen gleich 0.

Die Versuche aus der Figur 8 zeigen, dass auch CO₂ und CₓH_{y} vollständig abgebaut wurden. Aus der Figur 7 ist ersichtlich, dass der CO₂ nach ein paar Minuten kontinuierlich sinkt und gegen Ende des Tests gegen Null tendiert.

Die Resultate der Figuren 9 und 10 zeigen, dass, wenn nur Wasser benutzt wird, der Abbau von NOₓ sowie CₓH_{y} fastvollständig ist, der Abbau von CO₂ jedoch lediglich zu 20-30% erfolgt.

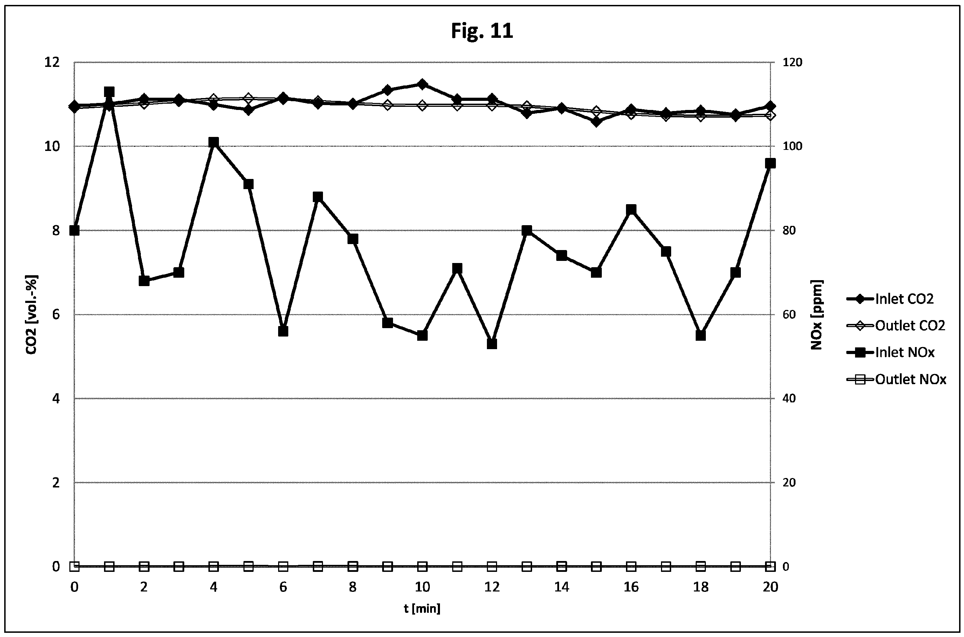

Die Resultate der Figur 11 zeigen, dass im Vorreaktor 126, der trocken gefahren wird, NOₓ vollständig umgewandelt wird jedoch CO₂ gar nicht umgesetzt wird. Dieser Vorreaktor entspricht in etwa dem Reaktor aus CN 101 564 640 und es wurde festgestellt, dass an dem Aktivkohlekatalysator unter "trocknen" Bedingungen im Vorreaktor kein CO₂ abgebaut wurde. Es ist also ersichtlich, dass im Verfahren wie aus CN 101 564 640 bekannt auch kein CO₂ abgebaut wurde. Ein Abbau von CO₂ findet, wie die Versuche zeigen, demanch nur an einem "nassen" Katalysator d.h. an einem mit Wasser bzw mit einer wässirgen Lösung, durchtränkten Katalysator statt.

Die Reaktion, die an einem "nassen" Katalysatoren ist demnach eine andere als die die an dem Katalysator aus CN 101 564 640 stafffindet da der Katalysator unter anderen Bedingungen eingesetzt wird.

Der Vergleich zwischen den Versuchen mit einem Reaktor und den Versuchen mit zwei Reaktoren zeigt, dass der Abbau der Schadstoffe mit zwei Reaktoren und mit Benutzung einer Base zum Abwaschen des Aktivkohlekatalysators in dem zweiten Reaktor nahezu komplett ist. In den anderen Konfigurationen lassen sich die Gehalte an Schadstoffen deutlich verringern.

Aus Testversuchen in einer Klärschlamm-Verbrennungsanlage mit typischen Rauchgaswerten von circa 10-12 Prozent CO₂, circa 8 bis 10 Prozent O₂ und circa 50 bis 200 ppm NOₓ konnten folgende Merkmale zur Umwandlung von NOₓ und mit parallel-Umwandlung von CO₂ bestätigt werden.

Für die oben genannte Rauchgaszusammensetzung wurde festgestellt, dass bei weniger als ungefähr 50 ppm NOₓ die CO₂-Abscheidung sinkt und über diesem Wert die CO₂-Abscheidung steigt. Gleichzeitig wurde bestätigt, dass bei diesen Konzentrationen ungefähr 100 Prozent des NOₓ Einganges umgesetzt wird und der NOₓ Ausgang somit praktisch null ist. Bei höheren Werten wird NOₓ nicht mehr komplett umgewandelt und die NOₓ Konzentration am Reaktorausgang steigt. Dieser oberste Schwellenwert ab dem NOₓ nicht mehr komplett umgesetzt wurde (zur CO₂ Abscheidung benötigt wurde) betrug im obengenannten Versuch circa 75 ppm.

Bei extrem hohen NOₓ-Konzentrationen - proportional zur Eingangskonzentration von CO₂ - kommt die CO₂-Abscheidung komplett zum Erliegen oder wird stark reduziert.

Bei solchen Werten an NOₓ-Konzentrationen hat sich gezeigt, dass es sinnvoll die Abgase einer Vorbehandlung in einem Reaktor mit einer trockenen Aktivkohle zu unterziehen.

Die oben genannten Versuche wurden von einem internationalen unabhängigen Labor bestätigt. Eine Kohlenstoff-Bilanz hat die Umwandlung von CO₂ in C und O₂ bestätigt.

**Zeichenerklärung:**

| | | | |
|---|---|---|---|
| 110 | Reaktor | 136 | Vorratsbehälter |
| 112 | Unterer Teil | 138 | Pumpe |
| 114 | Oberer Teil | 140 | Messgerät |
| 116 | Gebläse | 142 | Wasserversorgung |
| 118 | Quenche | 144 | Vorratsbehälter |
| 120 | Tropfenabscheider | 146 | Pumpe |
| 122 | Vorlagebehälter | 148 | Pumpe |
| 124 | Messgerät | 150 | Sprühkopf |
| 126 | Vorreaktor | 152 | Füllkörper |
| 128 | Katalysator des Vorreaktors | 154 | Behälter |
| 130 | Katalysator des Reaktors | 156 | Messgerät |
| 132 | Messgerät | 158 | Pumpe |
| 134 | Schornstein | 160 | Messgerät |

## Patentansprüche

1. Verfahren zur katalytischen Entfernung von Kohlendioxyd und NOₓ aus Abgasen in einem mit Aktivkohlekatalysator befüllten Reaktor wobei das Verfahren durch die folgenden Schritte gekennzeichnet ist:
a. Sättigung des Katalysators mit Wasser,
b. Sättigung oder Teilsättigung der Abgase mit Wasser,
c. Einführung der Abgase in den Reaktor,
d. Katalytische Umwandlung von NOx zu NO₂⁻ / NO₃⁻ und parallel dazu die katalytische Umwandlung am selben Katalysator von CO₂ in Kohlenstoff und O₂,
e. Kontinuierliches Auswaschen des Aktivkohlekatalysators mit Wasser und Austragen des Kohlenstoffs als Feststoff sowie NO₂⁻ / NO₃⁻gelöst im Wasser.

2. Verfahren gemäss Anspruch 1, **dadurch gekennzeichnet, dass** eine Sättigung oder Teilsättigung des Aktivkohlekatalysators mit NOₓ durch 0.1 bis 0.3 kg NOₓ/m³ Aktivkohlekatalysator erfolgt, bevor die Abgase in den Reaktor geleitet werden.

3. Verfahren gemäss einem der vorhergehenden Ansprüche, **dadurch gekennzeichnet, dass** CₓH_{y} gleichzeitig zu dem CO₂ und NOₓ aus den Abgasen entfernt wird.

4. Verfahren gemäss einem der Ansprüche 1-3, **dadurch gekennzeichnet, dass** es sich beim Aktivkohlekatalysator um ein Aktivkohlegranulat, mit einer Körnung zwischen 1-3 mm; 2-4 mm bzw. 3-5 mm die durch Dampfaktivierung hergestellt wurden handelt und folgende allgemeine Eigenschaften aufwiest Jodzahl 800; Methylenblauadsorption 11 g/100 g; Innere Oberfläche (B.E.T) 875 m²/g; Schüttdichte 260 kg/m³; Dichte nach Rückspülen 230 kg/m³; Gleichförmigkeitsgrad 1,3 - Aschegehalt 7 Gew.-%; pH alkaline; Feuchte (verpackt) 2 Gew.-%.

5. Verfahren gemäss einem der vorhergehenden Ansprüche, **dadurch gekennzeichnet, dass** die Abgase vor Schritt b) in einen Vorreaktor geführt werden, welcher einen zweiten Katalysator enthält und anschliessend im Schritt b) mit Wasser gesättigt oder teilgesättigt werden.

6. Verfahren gemäss Anspruch 5, **dadurch gekennzeichnet, dass** es sich beim dem zweiten Katalysator um ein extrudiertes Aktivkohlegranulat, mit einer Körnung von 3 mm mit folgende allgemeine Eigenschaften handelt: Butanabsorbtion bei p/p0=0.1: 24 g/100 g, Innere Oberfläche (B.E.T) 1200 m²/g; Schüttdichte 400 kg/m³; Härte (Ball-pan Hardness): 98, Feuchte (verpackt) 5 Gew.-%, Dekompositionszeit Max.: 15 min, Min.: 8 min.

7. Verfahren gemäss einem der Ansprüche 1-6, **dadurch gekennzeichnet, dass** die Abgase nach Schritt b) in einen Vorreaktor geführt werden, welcher einen zweiten Katalysator enthält und anschliessend in den Reaktor in Schritt c) eingeführt werden.

8. Verfahren gemäss Anspruch 5, 6 oder 7, **dadurch gekennzeichnet, dass** der zweite Katalysator im Vorreaktor in trockenem Zustand benutzt wird.

9. Verfahren gemäss einem der vorhergehenden Ansprüche, **dadurch gekennzeichnet, dass** dem Wasser in Schritten a), b und/oder e):
• eine Base Mⁿ⁺(OH⁻)ₙ, wobei M ausgewählt ist aus den Gruppen bestehend aus Alkalimetallen und Erdalkalimetallen und wobei n 1, 2 oder 3 ist und/oder,
• ein ionisches, anionisches, amphoteres oder nichtionisches Tensid
oder Mischungen daraus zugesetzt wird.

10. Verfahren gemäss einem der vorhergehenden Ansprüche, **dadurch gekennzeichnet, dass** die Abgase zwischen 100 und 1500 ppm NOₓ und zwischen 0.3 und 15 Vol.% CO₂ enthalten.

11. Verfahren gemäss einem der Ansprüche 3 bis 10, **dadurch gekennzeichnet, dass** die Abgase zwischen 0 und 700 ppm CₓH_{y} enthalten.

12. Verfahren gemäss einem der vorhergehenden Ansprüche, **dadurch gekennzeichnet, dass** die Eingangstemperatur der Abgase in dem Reaktor zwischen der Umgebungstemperatur und 150 °C liegt.

13. Verfahren gemäss einem der vorhergehenden Ansprüche, **dadurch gekennzeichnet, dass** der Sauerstoffgehalt der Abgase mindestens 5 Vol.%, bevorzugt mindestens 8 Vol.%, besonders bevorzugt mindestens 10 Vol.%, und insbesondere mindestens 12 Vol.% beträgt.

14. Verfahren gemäss einem der vorhergehenden Ansprüche, **dadurch gekennzeichnet, dass** bei dem Verfahren O₂ abgegeben wird.

## Claims

1. A method for the catalytic removal of carbon dioxide and NOₓ from waste/ flue gases in a reactor charged with activated carbon catalyst, said method being **characterised by** the following steps:
a. saturating the catalyst with water
b. saturating or partially saturating the waste gases with water,
c. introducing the waste gases into the reactor,
d. catalytically converting NOₓ into NO₂⁻/NO₃⁻ and, in parallel with this, catalytically converting CO₂ into carbon and O₂ on the same catalyst,
e. continuously washing out the activated carbon catalyst with water and discharging the carbon as a solid and NO₂⁻/NO₃⁻ dissolved in water.

2. A method according to claim 1, **characterised in that** saturation or partial saturation of the activated carbon catalyst with NOₓ by 0.1 to 0.3 kg NOₓ/m³ of activated carbon catalyst proceeds before the waste gases are conveyed into the reactor.

3. A method according to one of the preceding claims, **characterised in that** CₓH_{y} is removed from the waste gases at the same time as the CO₂ and NOₓ.

4. A method according to one of claims 1-3, **characterised in that** the activated carbon catalyst is an activated carbon granulate with a particle size of 1-3 mm, 2-4 mm or 3-5 mm produced by steam activation and having the following general properties: iodine number 800; methylene blue adsorption 11 g/100g; internal surface area (BET) 875 m²/g; bulk density 260 kg/m³; density after back-wash 230 kg/m³; uniformity factor 1.3 - ash content 7% by weight; pH alkaline; moisture (packed) 2% by weight.

5. A method according to one of the preceding claims, **characterised in that** the waste gases are passed prior to step b) into a prereactor containing a second catalyst and then saturated or partially saturated with water in step b).

6. A method according to claim 5, **characterised in that** the second catalyst is an extruded activated carbon granulate with a particle size of 3 mm with the following general properties: butane absorption at p/p0=0.1: 24g/100g; internal surface area (BET) 1200 m²/g; bulk density 400 kg/m³; hardness (ball-pan hardness): 98, moisture (packed) 5% by weight, decomposition time max.: 15 min, min.: 8 min.

7. A method according to one of claims 1-6, **characterised in that** the waste gases are passed after step b) into a prereactor containing a second catalyst and then introduced into the reactor in step c).

8. A method according to claim 5, 6 or 7, **characterised in that** the second catalyst is used in the dry state in the prereactor.

9. A method according to one of the preceding claims, **characterised in that** there are added to the water in steps a), b) and/or e):
• a base Mⁿ⁺(OH⁻)ₙ, M being selected from the groups consisting of alkali metals and alkaline earth metals and n being 1, 2 or 3 and/or,
• an ionic, anionic, amphoteric or nonionic surfactant
or mixtures thereof.

10. A method according to one of the preceding claims, **characterised in that** the waste gases contain between 100 and 1500 ppm of NOₓ and between 0.3 and 15% by volume of CO₂.

11. A method according to one of claims 3 to 10, **characterised in that** the waste gases contain between 0 and 700 ppm of CₓH_{y}.

12. A method according to one of the preceding claims, **characterised in that** the inlet temperature of the waste gases in the reactor lies between ambient temperature and 150°C.

13. A method according to one of the preceding claims, **characterised in that** the oxygen content of the waste gases is at least 5% by volume, preferably at least 8% by volume, particularly preferably at least 10% by volume, and in particular at least 12% by volume.

14. A method according to one of the preceding claims, **characterised in that** O₂ is released during the method.

## Revendications

1. Procédé pour l'élimination catalytique de dioxyde de carbone et de NOₓ à partir de gaz d'échappement/fumées dans un réacteur rempli d'un catalyseur à base de charbon actif, le procédé étant **caractérisé par** les étapes suivantes :
a. saturer le catalyseur par de l'eau,
b. saturer ou saturer partiellement les gaz d'échappement par de l'eau,
c. introduire les gaz d'échappement dans le réacteur,
d. convertir par voie catalytique le NOₓ en NO₂⁻/NO₃⁻ et, parallèlement à ceci, convertir par voie catalytique le CO₂ en carbone et en O₂ sur le même catalyseur,
e. laver en continu le catalyseur à base de charbon actif avec de l'eau et décharger le carbone sous la forme d'un solide ainsi que le mélange NO₂⁻/NO₃⁻ sous forme dissoute dans l'eau.

2. Procédé selon la revendication 1, **caractérisé en ce qu'**une saturation ou une saturation partielle du catalyseur à base de charbon actif par du NOₓ est effectuée par 0,1 à 0,3 kg de NOₓ/m³ de catalyseur à base de charbon actif, avant de guider les gaz d'échappement dans le réacteur.

3. Procédé selon l'une quelconque des revendications précédentes, **caractérisé en ce que** CₓH_{y} est éliminé en même temps que le CO₂ et le NOₓ des gaz d'échappement.

4. Procédé selon l'une quelconque des revendications 1-3, **caractérisé en ce qu'**il s'agit, pour le catalyseur à base de charbon actif, d'un granulat de charbon actif, ayant une dimension de particule entre 1-3 mm ; 2-4 mm ou 3-5 mm, obtenu par une activation à la vapeur d'eau et présentant les propriétés générales suivantes : indice d'iode 800 ; adsorption de bleu de méthylène 11 g/100 g ; surface interne (BET) 875 m²/g ; masse volumique apparente 260 kg/m³ ; masse volumique après lavage à contre-courant 230 kg/m³ ; facteur d'uniformité 1,3 - teneur en cendres 7% en poids ; pH alcalin ; humidité (sous forme conditionnée) 2% en poids.

5. Procédé selon l'une quelconque des revendications précédentes, **caractérisé en ce que** les gaz d'échappement sont guidés, avant l'étape b), dans un préréacteur qui contient un deuxième catalyseur et sont ensuite saturés ou partiellement saturés par de l'eau dans l'étape b).

6. Procédé selon la revendication 5, **caractérisé en ce qu'**il s'agit, pour le deuxième catalyseur, d'un granulat de charbon actif extrudé, ayant une dimension de particule de 3 mm et présentant les propriétés générales suivantes : absorption de butane à p/p0=0,1 : 24 g/100 g, surface interne (BET) 1200 m²/g ; masse volumique apparente 400 kg/m³ ; dureté (Ball-pan Hardness) : 98, humidité (sous forme conditionnée) 5% en poids, temps de décomposition max. : 15 min, min. : 8 min.

7. Procédé selon l'une quelconque des revendications 1-6, **caractérisé en ce que** les gaz d'échappement sont guidés, après l'étape b), dans un préréacteur qui contient un deuxième catalyseur et sont ensuite introduits dans le réacteur dans l'étape c).

8. Procédé selon la revendication 5, 6 ou 7, **caractérisé en ce que** le deuxième catalyseur est utilisé à l'état sec dans le préréacteur.

9. Procédé selon l'une quelconque des revendications précédentes, **caractérisé en ce que** l'eau dans les étapes a), b) et/ou e) est additionnée de :
- une base Mⁿ⁺(OH⁻)ₙ, M étant choisi dans les groupes constitués par les métaux alcalins et alcalino-terreux et n valant 1, 2 ou 3 et/ou
- un agent tensioactif ionique, anionique, amphotère ou non ionique
ou de leurs mélanges.

10. Procédé selon l'une quelconque des revendications précédentes, **caractérisé en ce que** les gaz d'échappement contiennent entre 100 et 1500 ppm de NOₓ et entre 0,3 et 15% en volume de CO₂.

11. Procédé selon l'une quelconque des revendications 3 à 10, **caractérisé en ce que** les gaz d'échappement contiennent entre 0 et 700 ppm de CₓH_{y}.

12. Procédé selon l'une quelconque des revendications précédentes, **caractérisé en ce que** la température d'entrée des gaz d'échappement dans le réacteur se situe entre la température ambiante et 150°C.

13. Procédé selon l'une quelconque des revendications précédentes, **caractérisé en ce que** la teneur en oxygène des gaz d'échappement est d'au moins 5% en volume, de préférence d'au moins 8% en volume, de manière particulièrement préférée d'au moins 10% en volume et en particulier d'au moins 12% en volume.

14. Procédé selon l'une quelconque des revendications précédentes, **caractérisé en ce que** de l'O₂ est libéré pendant le procédé.
